# EUROPÄISCHE PATENTSCHRIFT

(11) **EP 2 035 499 B1**
(45) Veröffentlichungstag und Bekanntmachung des Hinweises auf die Patenterteilung: **10.08.2011**
(21) Anmeldenummer: 07764593.5
(22) Anmeldetag: 08.06.2007
(51) Int. Cl.: C08L 67/02, C08L 69/00

(54) **VERFAHREN ZUR HERSTELLUNG SCHLAGZÄHMODIFIZIERTER POLYALKYLENTEREPHTHALAT/POLYCARBONAT-ZUSAMMENSETZUNGEN**
METHOD FOR PRODUCING IMPACT-MODIFIED POLYALKYLENE TEREPHTHALATE/POLYCARBONATE COMPOSITIONS
PROCÉDÉ DE PRODUCTION DE COMPOSITIONS À RÉSILIENCE MODIFIÉE DE POLYALKYLÈNE TÉRÉPHTALATE ET DE POLYCARBONATE

(30) Priorität: 20.06.2006 DE 102006028233
(43) Veröffentlichungstag der Anmeldung: 18.03.2009
(73) Patentinhaber: Bayer MaterialScience AG, 51368 Leverkusen (DE)
(72) Erfinder: MOULINIE, Pierre, 51375 Leverkusen (DE)
(86) Internationale Anmeldenummer: PCT/EP2007/005083
(87) Internationale Veröffentlichungsnummer: WO 2007/147490

(56) Entgegenhaltungen:
- EP-A2- 0 803 537
- WO-A-98/23684
- US-B1- 6 476 158
- DATABASE WPI Week 199502 Derwent Publications Ltd., London, GB; AN 1995-011971 XP002448330 & JP 06 298991 A (SUMITOMO CHEM CO LTD) 25. Oktober 1994 (1994-10-25)

## Beschreibung

Die vorliegende Erfindung betrifft ein Verfahren zur Herstellung von schlagzähmodifizierten Polyalkylenterephthalt/Polycarbonat-Zusammensetzungen, die sich gegenüber dem Stand der Technik durch einen erhöhten Glanz bei unverändert guter Kerbschlagzähigkeit auszeichnen.

Schlagzähmodifzierte Formmassen, die ein Polyesterharz, ein Polycarbonatharz und einen Glycidylester als Schlagzähmodifikator enthalten, und deren Verwendung als Formmassen beispielsweise im Automobilsektor für Formteile wie beispielsweise Spiegelgehäuse und Motorhauben-Lüftungsgitter, bei denen ein glänzendes, fehlerfreies Oberflächen-Aussehen vorausgesetzt wird, sind bekannt (siehe beispielsweise US 5,369,154).

EP-A 0 803 537 offenbart ein Verfahren zur Herstellung schlagzähmodifizierter Polyester/Polycarbonat-Formmassen, gemäß dem in einem ersten Schritt eine Mischung aus Glycidylester-Copolymer und Polycarbonat-Harz in der Schmelze hergestellt wird, und dann in einem zweiten Schritt diese Mischung aus Glycidylester-Copolymer und Polycarbonat-Harz mit einem Polyesterharz und einem zweiten Teil des Polycarbonatharzes kombiniert wird.

Aufgabe dieser Erfindung war daher, ein verbessertes Verfahren zur Herstellung von mit Glycidylester-Copolymer schlagzähmodifizierten Polyalkylenterephthalt/Polycarbonat-Zusammensetzungen zu entwickeln, die sich durch einen verbesserten Glanz unter Beibehaltung einer hohen Kerbschlagzähigkeit auszeichnen.

Überraschend wurde nun gefunden, dass durch ein Verfahren, welches einen ersten Schritt, in dem in eine Schmelze des Schlagzähmodifikators das Polyalkylenterephthalat und/oder Polycarbonat als Pulver eingearbeitet wird, und einen zweiten Schritt umfasst, in dem der gefüllte Schlagzähmodifikator aus dem ersten Schritt mit weiterem Polyalkylenterephthalat und/oder Polycarbonat bevorzugt in der Schmelze vermischt wird, Zusammensetzungen erhalten werden, die sich durch einen verbesserten Glanz auszeichnen unter Beibehaltung einer guter Kerbschlagzähigkeit der Zusammensetzung.

Gegenstand der Erfindung ist ein Verfahren zur Herstellung von schlagzähmodifizierten Polyalkylenterephthalat/Polycarbonat-Zusammensetzungen, umfassend
(i) Kombinieren einer Schmelze eines Schlagzähmodifikators aus Glycidylester mit mindestens einer Komponente ausgewählt aus der Gruppe bestehend aus Polyalkylenterephthalat (gemäß Komponente A) in Form eines Pulvers und Polycarbonat (gemäß Komponente B) in Form eines Pulvers,
(ii) Kombinieren der Mischung aus (i) mit mindestens einer Komponente ausgewählt aus der Gruppe bestehend aus Polyalkylenterephthalat (gemäß Komponente A) und Polycarbonat, (gemäß Komponente B) und ggf. weiteren Komponenten in der Schmelze,
wobei die Schmelze in Schritt (i) eine Temperatur von 90 - 175 °C, bevorzugt von 100 - 150 °C aufweist und
wobei in einer bevorzugten Ausführungsform die Zusammensetzung
A) 4 bis 95 Gew.-Teile, vorzugsweise 10 bis 60 Gew.-Teile, besonders bevorzugt 12 bis 40 Gew.-Teile, insbesondere 15 bis 30 Gew.-Teile Polyalkylenterephthalat, bevorzugt Polybutylenterephthalat,
B) 4 bis 95 Gew.-Teile, vorzugsweise 20 bis 80 Gew.-Teile, besonders bevorzugt 25 bis 60 Gew.-Teile, insbesondere 35 bis 55 Gew.-Teile aromatisches Polycarbonat,
C) 1 bis 30 Gew.-Teile, vorzugsweise 3 bis 25 Gew.-Teile, besonders bevorzugt 6 bis 20 Gew.-Teile, insbesondere 8 bis 16 Gew.-Teile Schlagzähmodifikator aus Glycidylester und
D) 0 bis 20 Gew.-Teile, bevorzugt 0,15 bis 15 Gew.-Teile, besonders bevorzugt 0,2 bis 10 Gew.-Teile übliche Additive und Verarbeitungshilfsmittel
enthält, wobei die Summe der Gew.-Teile der Komponenten A + B + C + D gleich 100 normiert ist.

Der Schirtt (ii) erfolgt nach an sich bekannten Verfahren durch Mischen der Komponenten. Es kann vorteilhaft sein, einzelne Komponenten vorzumischen. Vorzugsweise geschieht das Mischen der Schmelze aus dem Schritt (i) mit den Komponenten A) bis D) sowie gegebenenfalls weiterer Bestandteile bei Temperaturen von 220 bis 300°C durch gemeinsames Kneten, Extrudieren oder Verwalzen der Komponenten.

Die mittlere Teilchengröße d₅₀ bestimmt mittels Lichtstreuung (Puckhaber, M.; Roethele, S. Powder Handling & Processing (1999), 11(1), 91-95)) ist der Durchmesser oberhalb und unterhalb dessen jeweils 50 Gew.-% der Teilchen liegen.

Die mittlere Teilchengröße d₅₀ des in Schritt (i) eingesetzten pulverförmigen Polyalkylenterephthalats bzw. des pulverförmigen Polycarbonats beträgt bevorzugt 600 bis 700 µm, besonders bevorzugt 630 bis 640 µm.

Eine bevorzugte Ausführungsform der Erfindung ist ein Verfahren zur Herstellung von schlagzähmodifizierten Polyalkylenterephthalat/Polycarbonat-Zusammensetzungen, umfassend
(i) Kombinieren einer Schmelze (bei einer Temperatur von 90 - 175 °C, bevorzugt von 100 - 150 °C) eines Schlagzähmodifikators aus Glycidylester mit Polyalkylenterephthalat gemäß Komponente A in Form eines Pulvers mit einer mittleren Teilchengröße d₅₀ von 600 bis 700 µm und
(ii) Kombinieren der Mischung aus (i) mit mindestens einer Komponente ausgewählt aus der Gruppe bestehend aus Polyalkylenterephthalat (Komponente A) und Polycarbonat (Komponente B) und ggf. weiteren Komponenten, dadurch gekennzeichnet, dass dieser Verfahrensschritt bei Temperaturen von 220 bis 300°C in der Schmelze durch gemeinsames Kneten, Extrudieren oder Verwalzen der Komponenten erfolgt,
wobei die Zusammensetzung
A) 4 bis 95 Gew.-Teile, vorzugsweise 10 bis 60 Gew.-Teile, besonders bevorzugt 12 bis 40 Gew.-Teile, insbesondere 15 bis 30 Gew.-Teile Polyalkylenterephthalat, bevorzugt Polybutylenterephthalat,
B) 4 bis 95 Gew.-Teile, vorzugsweise 20 bis 80 Gew.-Teile, besonders bevorzugt 25 bis 60 Gew.-Teile, insbesondere 35 bis 55 Gew.-Teile aromatisches Polycarbonat,
C) 1 bis 30 Gew.-Teile, vorzugsweise 3 bis 25 Gew.-Teile, besonders bevorzugt 6 bis 20 Gew.-Teile, insbesondere 8 bis 16 Gew.-Teile Schlagzähmodifikator aus Glycidylester und
D) 0 bis 20 Gew.-Teile, bevorzugt 0,15 bis 15 Gew.-Teile, besonders bevorzugt 0,2 bis 10 Gew.-Teile übliche Additive und Verarbeitungshilfsmittel
enthält.

### Komponente A

Als Komponente A) enthalten die Zusammensetzungen erfindungsgemäß ein oder eine Mischung aus zwei oder mehr unterschiedlichen Polyalkylenterephthalaten. Polyalkylenterephthalate im Sinne der Erfindung sind Polyalkylenterephthalate, die sich von Terephthalsäure (oder ihren reaktionsfähigen Derivaten) und Alkandiolen beispielsweise auf Basis von Propylenglycol oder Butandiol ableiten. Erfindungsgemäß werden als Komponente A) bevorzugt Polybutylenterephthalat und/oder Polytrimethylenterephthalat, am meisten bevorzugt Polybutylenterephthalat eingesetzt.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.%, bezogen auf die Dicarbonsäure, Terephthalsäurereste und mindestens 80, vorzugsweise mindestens 90 Mol.%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

Bevorzugt können die nach dem erfindungsgemäßen Verfahren hergestellten Polyester auch im Gemisch mit anderen Polyestern und/oder weiteren Polymeren eingesetzt werden. Besonders bevorzugt werden Gemische von Polyalkylenterephthalaten mit anderen Polyestern eingesetzt.

Den Polyestern können übliche Additive wie z.B. Entformungsmittel, Stabilisatoren und/oder Fließmittel in der Schmelze zugemischt oder auf der Oberfläche aufgebracht werden.

### Komponente B

Als Komponente B) enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 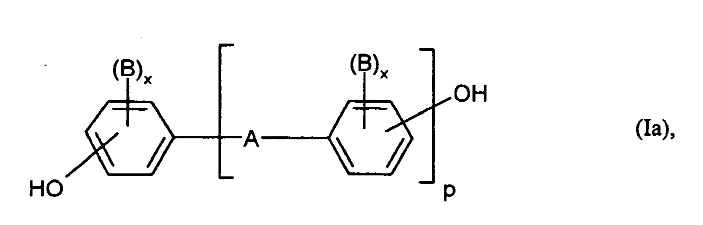 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 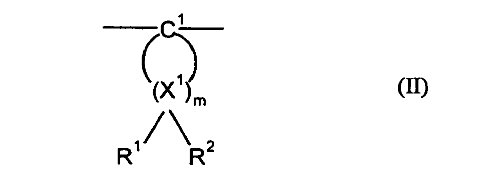 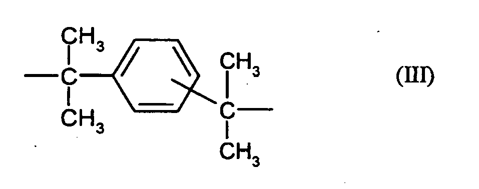
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆- Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenyl-ethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-düsopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 52, in DE-A 2 211 956, in DE-A 3 832 396, und in FR-A 1 561 518 sowie in den Japanischen Offenlegungsschriften mit den Anmeldenummern JP-A 62039 1986, JP-A 62040 1986 und JP-A 105550 1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beispielsweise beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate, haben bevorzugt ein Gewichtsmittel der molaren Masse (M_{w}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol% bis 2 Mol%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxy-endgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

### Komponente C

Als Komponente C) enthalten die Zusammensetzungen erfindungsgemäß einen Schlagzähmodifikator aus Glycidylester,welcher ein statistisches Copolymer der Formel (IV) ist, 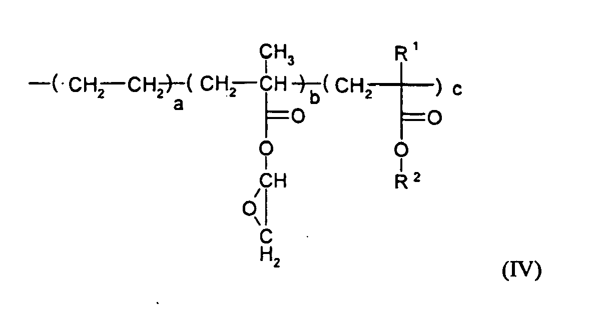 wobei
- R¹: H oder C₁- bis C₆-Alkyl ist, bevorzugt H oder Methyl,
- R²: Alkyl oder Aryl ist, bevorzugt (C₁-C₄)Alkyl oder (C₆-C₂₀)Aryl, besonders bevorzugt Methyl, Ethyl, Butyl,
a+b+c=100ist,
a einen Wert von 50 bis 99,5, bevorzugt von 45 bis 75, besonders bevorzugt von 60 bis 75 hat,
b einen Wert von 0,5 bis 25, bevorzugt von 4 bis 16, besonders bevorzugt von 6 bis 8 hat, und
c einen Wert von 0 bis 50, bevorzugt von 20 bis 40, besonders bevorzugt von 20 bis 25 hat.

Der Begriff (C₆-C₂₀)Aryl bedeutet eine Kohlenwasserstoffgruppe, die ein oder mehrere ungesättigte 6-gliedrige Kohlenstoffringe einschließt und, gegebenenfalls mit einer oder mehreren Alkylgruppe an einem der aromatischen Ringe substituiert sein kann, um eine Substituentengruppe mit insgesamt 6 bis 20 Kohlenstoffatomen pro Gruppe zu bilden, wie beispielsweise Phenyl, Naphthyl, Tolyl, Xylyl, Mesityl, Isopropylphenyl.

### Komponente D

Darüber hinaus kann die Zusammensetzung weitere handelsübliche Polymeradditive wie beispielsweise Flammschutzmittel (z.B. Organophosphate, Silikone oder halogenierte organische Verbindungen), Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), kautschukelastischen Polymerisate, Nukleiermittel, Antistatika, Stabilisatoren, Füll- und Verstärkungsstoffe (beispielsweise Glas- oder Carbonfasern, Glimmer, Talk, Wollastonit, Kaolin, CaCO₃ und Glasschuppen) sowie Farbstoffe und Pigmente enthalten. Diese Additive kommen in den erfindungsgemäßen Formmassen in Konzentrationen von bis zu 20 Gew.-%, bevorzugt von 0,01 bis 10 Gew.-%, besonders bevorzugt 0,05 bis 5 Gew.-%, insbesondere bevorzugt 0,1 bis 3 Gew.-%, bezogen auf das Gesamtgewicht der Formmassen, zum Einsatz.

Alle Gewichtsteil-Angaben in dieser Anmeldung sind so normiert, dass die Summe der Gewichtsteile der Komponenten A) bis C) und gegebenenfalls D) in der Zusammensetzung gleich 100 gesetzt wird.

Die nach dem erfindungsgemäßen Verfahren hergestellten; Zusammensetzungen können als Komponente D) weiterhin übliche Zusatzstoffe enthalten, die im Allgemeinen bis 15, vorzugsweise in einer Menge von 0,01 bis 10, besonders bevorzugt 0,05 bis 5, insbesondere bevorzugt 0,1 bis 3 Gew.-%, bezogen auf das Gesamtgewicht der Formmassen, zugesetzt werden können.

Alle üblichen Additive wie z.B. Stabilisatoren (zum Beispiel UV-Stabilisatoren, Thermostabilisatoren), Antistatika, Fließhilfsmittel, Entformungsmittel, Brandschutzadditive, Emulgatoren, Nukleierungsmittel, Weichmacher, Gleitmittel, pH-Wert erniedrigende Additive (z.B. Carboxylgruppen enthaltende Verbindungen), Additive zur Erhöhung der Leitfähigkeit, Farbstoffe und Pigmente kommen infrage. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können zum Beispiel sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können Russe, Leitfähigkeitsrusse, Carbonfibrillen, nanoskalige Graphitfasern (Nanotubes), Graphit, leitfähige Polymere, Metallfasern sowie andere übliche Additive zur Erhöhung der Leitfähigkeit zugesetzt werden.

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 (PCT/EP/05705) geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 363 608 und EP-A 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und und Tetrafluorethylenpolymerisate können zugesetzt werden. Die Flammschutzmittel, gegebenenfalls mit einem Synergisten, wie Antimonverbindungen, und Antidripping-Mittel werden im Allgemeinen bis zu einer Menge von 30, vorzugsweise 20 Gew.-% (bezogen auf die Gesamtzusammensetzung) eingesetzt.

Als Zusatzstoffe können auch Füllstoffe wie beispielsweise Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden erfindungsgemäß mineralische teilchenförmige Füllstoffe auf der Basis von Talk, Wollastonit und/oder Glasfasern. Am meisten bevorzugt werden Füllstoffe auf Basis von Talk. Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die gemäß dem erfindungsgemäßen Verfahren erhaltenen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Formteile bzw. Halbzeuge aus den erfindungsgemäß verwendeten Formmassen/Zusammensetzungen können sich auch im Verbund mit weiteren Werkstoffen wie z.B. Metall oder Kunststoff befinden. Die erfindungsgemäßen Formmassen bzw. die Formteile/Halbzeuge aus den erfindungsgemäßen verwendeten Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Innenteile von Kraftfahrzeugen (beispielsweise Spiegelgehäuse, Lüftungsgitter) oder Karosserieaußenteilen eingesetzt werden. Gegenstand der Erfindung sind daher ebenfalls Kraftfahrzeuge enthaltend die erfindungsgemäßen Formmassen oder Zusammensetzungen.

Die Glanzbeurteilung der ebenen Kunststoffoberflächen der erfindungsgemäß hergestellten Formteile bzw. Halbzeuge erfolgte gemäß DIN 67 530 mit einem Reflektometer bei einem Einstrahlungswinkel von 20°. Hochglänzend im erfindungsgemäßen Sinne bedeutet ein Glanz-Wert von größer oder gleich 90 %. Gegenstand der Erfindung ist daher ebenfalls die Verwendung des erfindungsgemäßen Verfahrens zur Herstellung von hochglänzenden Formteilen bzw. Halbzeugen sowie hochglänzende Formteile bzw. Halbzeuge enthaltend die erfindungsgemäßen Formmassen oder Zusammensetzungen.

### Beispiele

### Komponente A-1

Lineares Polybutylenterephthalat-Pulver mit einer mittleren Teilchengröße (d₅₀) von 648 µm und mit einer Schmelzviskosität nach DIN 54 811 von 199 Pa·s bei 240°C und bei einer Scherrate von 500 s⁻¹ (Pocan^{®} B 1300, Lanxess AG, Leverkusen, Deutschland).

### Komponente A-2

Polybutylenterephthalat-Granulat mit einer Schmelzviskosität nach DIN 54 811 von 227 Pa·s bei 240°C und bei einer Scherrate von 500 s⁻¹ (Ultradur^{®} B 2550, BASF AG, Ludwigshafen, Deutschland)

### Komponente A-3

Lineares Polybutylenterephthalat-Granulat mit einer Schmelzviskosität nach DIN 54 811 von 199 Pa·s bei 240°C und bei einer Scherrate von 500 s⁻¹ (Pocan^{®} B 1300, Lanxess AG, Leverkusen, Deutschland).

### Komponente B-1

Kryo-gemahlenes Polycarbonat-Pulver mit einer mittleren Teilchengröße (d₅₀) von 632 µm und mit einer relativen Lösungsviskosität von 1,318, gemessen in Dichlormethan als Lösungsmittel bei 25°C und in einer Konzentration von 0,5 g/100 ml (Makrolon^{®} 3108, Bayer MaterialScience AG, Leverkusen, Deutschland).

### Komponente B-2

Polycarbonat-Granulat mit einer relativen Lösungsviskosität von 1,280, gemessen in Dichlormethan als Lösungsmittel bei 25°C und in einer Konzentration von 0,5 g/100 ml (Makrolon^{®} 2608, Bayer MaterialScience AG, Leverkusen, Deutschland).

### Komponenten C-1 bis C-5

Glycidylester-Copolymer als Schlagzähmodifikator gemäß Formel (IV), wobei a, b, c, R¹ und R² gemäß der nachfolgenden Tabelle 1 definiert sind.

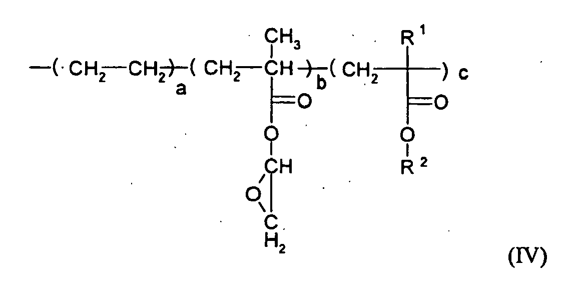

**Tabelle 1 Komponente C-1 bis C-5**

| Kompo-nente | Handelsname | Hersteller | a | b | c | R¹ | R² | MVR*) [cm³/10 min] |
|---|---|---|---|---|---|---|---|---|
| **C-1** | Lotader^{®} AX8900 | Arkéma | 67 | 8 | 25 | H | CH₃ | 6 |
| **C-2** | Lotryl^{®} 29MA03 | Arkéma | 71 | 0 | 29 | CH₃ | CH₃ | 2,8 |
| **C-3** | Lotryl^{®} 30BA02 | Arkéma | 71 | 0 | 29 | CH₃ | C₄H₉ | 2,0 |
| **C-4** | Elvaloy^{®} 2715 | Dupont | 85 | 0 | 15 | CH₃ | C₂H₅ | 7,0 |
| **C-5** | Elvaloy^{®} 3427 | Dupont | 73 | 0 | 27 | CH₃ | C₂H₅ | 4,0 |

| | | | | | | | | |
|---|---|---|---|---|---|---|---|---|
| *) Schmelzvolumenindex bei 190°C gemäß ISO 1133 bei einer Belastung mit 2,16 kg. | | | | | | | | |

### Komponente D-1

Kohlenstoff-Ruß (Black Pearls^{®} 800, Cabot Corporation, Boston, USA).

### Komponente D-2

Phosphitstabilisator (Irgafos^{®} 168, Ciba Specialities, Basel, die Schweiz).

Die Ausprüfungen der Formmassen erfolgte nach folgenden Methoden:
Izod-Schlagzähigkeit: Zähigkeit nach ISO 180 Methode 1 U, gemessen bei Raumtemperatur.
Die Glanzbeurteilung der ebenen Kunststoffoberflächen erfolgte gemäß DIN 67 530 mit einem Reflektometer bei einem Einstrahlungswinkel von 20°. Die entsprechenden Messwerte sind in den Tabellen als "20° Glanz" angegeben.

### Herstellung und Prüfung der erfindungsgemäßen Formmassen

### Schritt 1: Herstellung der gefüllten CoPE

Das Mischen der Komponenten entsprechend der Zusammensetzungen gemäß Tabelle 2 erfolgt auf einem Zweiwellenextruder (ZSK25 der Fa. Werner und Pfleiderer) bei einer einer Massetemperatur von 130 bis 150 °C. Diesen wurden mit 10 kg/h Durchsatz produziert, wobei kein Strangabriss auftrat.

**Tabelle 2: Herstellung der gefüllten Glycidylester-Copolymere (CoPE)**

| **CoPE-** | **a** | **b** | **c** | **d** | **e** | **F** | **g** | **h** |
|---|---|---|---|---|---|---|---|---|
| Komponenten (Gew.-Tle) | | | | | | | | |
| **A-1** | 50 | 50 | 50 | 50 | 50 | 50 | 60 | |
| **B-1** | | | | | | | | 60 |
| **C-1** | 50 | 37,5 | 25 | 25 | 25 | 25 | 40 | 40 |
| **C-2** | | 12,5 | 25 | | | | | |
| **C-3** | | | | 25 | | | | |
| **C-4** | | | | | 25 | | | |
| **C-5** | | | | | | 25 | | |

### Schritt 2: Herstellung der Formmassen nach dem erfindungsgemäßen Verfahren

Das Mischen der Komponenten erfolgt auf einem Zweiwellenextruder (ZSK25 der Fa. Werner und Pfleiderer) bei einer Massetemperatur von 250°C bis 255°C und einem Durchsatz von 15 kg/h. Die resultierende Mischung wird granuliert und getrocknet.

Die Formkörper werden (wenn nicht anders beschrieben) bei 260 bis 280°C und Werkzeugtemperaturen von 70 bis 90°C auf einer Spritzgießmaschine Typ Arburg 270 E hergestellt.

Zusammensetzung und Eigenschaften der nach dem erfindungsgemäßen Verfahren hergestellten thermoplastischen Formmassen gehen aus Tabelle 3 hervor. Aus der Berechnung der Gesamt-Zusammensetzung der Formmassen der Tabelle 3 folgt, dass diese Formmassen jeweils 20 Gew.-% A-Komponenten (A-1 und A-2), 76,4 Gew.-% B-Komponenten (B-1 und B-2) und 3,0 Gew.-% C-Komponenten (C-1 bis C-5) enthalten.

**Tabelle 3 Zusammensetzungen und ihre Eigenschaften**

| | **1** | **2** | **3** | **4** | **5** | **6** | **7** | **8** |
|---|---|---|---|---|---|---|---|---|
| eingesetzte Komponenten | | | | | | | | |
| **CoPE** | **a** | **b** | **c** | **d** | **E** | **f** | **g** | **h** |
| **CoPE** (Gew.-Tle) | 6,0 | 6,0 | 6,0 | 6,0 | 6,0 | 6,0 | 7,5 | 7,5 |
| **A-2** (Gew.-Tle) | 17,0 | 17,0 | 17,0 | 17,0 | 17,0 | 17,0 | 15,5 | 20,0 |
| **B-1** (Gew.-Tle) | 5,0 | 5,0 | 5,0 | 5,0 | 5,0 | 5,0 | 5,0 | 5,0 |
| **B-2** (Gew.-Tle) | 71,4 | 71,4 | 71,4 | 71,4 | 71,4 | 71,4 | 71,4 | 66,9 |
| **D-1** (Gew.-Tle) | 0,4 | 0,4 | 0,4 | 0,4 | 0,4 | 0,4 | 0,4 | 0,4 |
| **D-2** (Gew.-Tle) | 0,2 | 0,2 | 0,2 | 0,2 | 0,2 | 0,2 | 0,2 | 0,2 |

| **berechnete Zusammensetzung** | | | | | | | | |
|---|---|---|---|---|---|---|---|---|
| **A-1** (Gew.-%) | 3 | 3 | 3 | 3 | 3 | 3 | 4,5 | - |
| **A-2** (Gew.-%) | 17 | 17 | 17 | 17 | 17 | 17 | 15,5 | 20 |
| **B-1** (Gew.-%) | 5 | 5 | 5 | 5 | 5 | 5 | 5 | 9,5 |
| **B-2** (Gew.-%) | 71,4 | 71,4 | 71,4 | 71,4 | 71,4 | 71,4 | 71,4 | 66,9 |
| **C-1** (Gew.-%) | 3 | 2,25 | 1,5 | 1,5 | 1,5 | 1,5 | 3 | 3 |
| **C-2** (Gew.-%) | - | 0,75 | 1,5 | - | - | - | - | - |
| **C-3** (Gew.-%) | - | - | - | 1,5 | - | - | - | - |
| **C-4** (Gew.-%) | - | - | - | - | 1,5 | - | - | - |
| **C-5** (Gew.-%) | - | - | - | - | - | 1,5 | - | - |
| **D-1** (Gew.-%) | 0,4 | 0,4 | 0,4 | 0,4 | 0,4 | 0,4 | 0,4 | 0,4 |
| **D-2** (Gew.-%) | 0,2 | 0,2 | 0,2 | 0,2 | 0,2 | 0,2 | 0,2 | 0,2 |
| Eigenschaften | | | | | | | | |
| Izod-Kerbschlagzähigkeit (kJ/m²) | 63,6 | 62,2 | 60,0 | 58,5 | 55,1 | 58,4 | 64,7 | 59,5 |
| 20° Glanz (%) | 92,7 | 97,4 | 99,2 | 94,3 | 95,9 | 99,1 | 92,5 | 94,6 |

### Vergleichsbeispiele: Herstellung und Prüfung: von nicht- erfindungsgemäß erhaltenen Formmassen

### Schritt 1: Herstellung der gefüllten CoPE

Zur Herstellung eines Präcompounds aus PBT und dem Glycidylester-Copolymer entsprechend der Zusammensetzungen gemäß Tabelle 4 erfolgt das Mischen der Komponenten auf einem Zweiwellenextruder (ZSK25 der Fa. Werner und Pfleiderer) bei einer Massetemperatur von 216°C bis 220°C. Diesen wurden mit 15 kg/h Durchsatz produziert, wobei kein Strangabriss auftrat

**Tabelle 4 CoPE-Präcompound-Zusammensetzungen (Vergleichsbeispiele)**

| **CoPE-** | **i** | **j** |
|---|---|---|
| | **(Vergleich)** | **(Vergleich)** |
| Komponenten (Gew.-Tle) | | |
| **A-2** | 69,5 | 84,5 |
| **C-1** | 30,0 | 15,0 |
| **D-1** | 0,2 | 0,2 |
| **D-2** | 0,3 | 0,3 |

### Schritt 2: Herstellung der nicht-erfindungsgemäß erhaltenen Formmassen (Vergleichsbeispiele)

Das Mischen der Komponenten erfolgt auf einem Zweiwellenextruder (ZSK25 der Fa. Werner und Pfleiderer) bei einer Massetemperatur von 250°C bis 257°C und einem Durchsatz von 15 kg/h. Die resultierende Mischung wird granuliert und getrocknet.

Die Formkörper werden (wenn nicht anders beschrieben) bei 260 bis 280°C und Werkzeugtemperaturen von 70 bis 90°C auf einer Spritzgießmaschine Typ Arburg 270 E hergestellt.

Zusammensetzung und Eigenschaften der nicht-erfindungsgemäß erhaltenen thermoplastischen Formmassen gehen aus Tabelle 5 hervor. Aus der Berechnung der Gesamt-Zusammensetzung der Formmassen der Tabelle 5 folgt, dass diese Formmassen jeweils in der Summe ca. 17 Gew.-% an A-Komponenten, 79,5 Gew.-% an B-Komponenten , 3,0 Gew.-% an C-Komponenten und 0,55 bzw. 0,6 Gew.-% an D-Komponenten enthalten.

**Tabelle 5 Zusammensetzungen und ihre Eigenschaften (Vergleichsbeispiele)**

| | **9 (Vergleich)** | **10 (Vergleich)** |
|---|---|---|
| **eingesetzte Komponenten** | | |
| **CoPE i j** | | |
| **CoPE** (Gew.-Tle) | 10 | 20 |
| **A-3** (Gew.-Tle) | 10 | - |
| **B-1** (Gew.-Tle) | 5,0 | 5,0 |
| **B-2** (Gew.-Tle) | 74,5 | 74,5 |
| **D-1** (Gew.-Tle) | 0,2 | 0,2 |
| **D-2** (Gew.-Tle) | 0,3 | 0,3 |

| **Berechnete Zusammensetzung** | | |
|---|---|---|
| **A-2** (Gew.-%) | 6,95 | 16,90 |
| **A-3** (Gew.-%) | 10 | - |
| **B-1** (Gew.-%) | 5 | 5 |
| **B-2** (Gew.-%) | 74,5 | 74,5 |
| **C-1** (Gew.-%) | 3 | 3 |
| **D-1** (Gew.-%) | 0,22 | 0,24 |
| **D-2** (Gew.-%) | 0,33 | 0,36 |

| **Eigenschaften** | | |
|---|---|---|
| Izod-Kerbschlagzähigkeit (kJ/m²) | 67,2 | 66,1 |
| 20° Glanz (%) | 90,0 | 87,1 |

Das Verfahren zur Herstellung der Vergleichsbeispiele 9 und 10 führt zu Formteilen, die einen niedrigeren Glanz aufweisen (siehe Tabelle 5) als das erfindungsgemäße Verfahren zur Herstellung der Beispiele 1 bis 8 (siehe Tabelle 3).

Durch das erfindungsgemäße Verfahren ist es sehr effizient möglich, das Glycidylester-Copolymer (Komponente C) in Mengen auch über 30 Gew.-% in das Polyalkylenterephthalat oder Polycarbonat einzuarbeiten. Wie in den Tabellen 2 anhand der erfindungsgemäßen, gefüllte Glycidylester-Copolymere **CoPE-a** bis **CoPE-h** belegt, können mit dem erfindungsgemäßen Verfahren ohne negative Auswirkungen auf den Glanz der resultierenden Formteile (siehe Tabelle 3) auch Mischungen mit einem Anteil von 40 bzw. 50 Gew.-% Glycidylester-Copolymer hergestellt und verarbeitet werden.

Wenn dagegen die Mischung des Glycidylester-Copolymers (Komponente C) mit Polyalkylenterephthalat im ersten Schritt in der Schmelze gemäß den üblichen Compoundierungsmethoden erfolgt, ist eine Konzentration von über 30 Gew.-% in der Gesamtzusammensetzung des Formteils nicht zu erreichen, da mit zunehmenden Gehalt an Glycidylester-Copolymers die extrudierte Schmelze instabil wird hinsichtlich einer Entmischung (Phasentrennung), bevor der feste Aggregatszustand erreicht wird. Ein weiterer Nachteil der Vermischung in der Schmelze (Verfahren gemäß der Verglichsbeispiele) ist, dass in der Schmelze die Endgruppen des Polyalkylenterephthalats mit Epoxidgruppen des Glycidylester-Copolymers reagieren können und so die Bildung von großen, schwer-dispergierbaren Partikeln bewirkt, welche nach Weiterverarbeitung den Glanz des resultierenden Formteils reduzieren.

## Patentansprüche

1. Verfahren zur Herstellung von schlagzähmodifizierten Polyalkylenterephthalat/Polycarbonat-Zusammensetzungen, umfassend
(i) Kombinieren einer Schmelze eines Schlagzähmodifikators aus Glycidylester mit mindestens einer Komponente ausgewählt aus der Gruppe bestehend aus Polyalkylenterephthalat (gemäß Komponente A) in Form eines Pulvers und Polycarbonat (gemäß Komponente B) in Form eines Pulvers,
(ii) Kombinieren der Mischung aus (i) mit mindestens einer Komponente ausgewählt aus der Gruppe bestehend aus Polyalkylenterephthalat (gemäß Komponente A) und Polycarbonat (gemäß Komponente B) und ggf. weiteren Komponenten in der Schmelze,
wobei die Schmelze in Schritt (i) eine Temperatur von 90 - 175 °C aufweist.

2. Verfahren zur Herstellung von schlagzähmodifizierten Polyalkylenterephthalat/Polycarbonat-Zusammensetzungen gemäß Anspruch 1, wobei die Schmelze in Schritt (i) eine Temperatur von 100 -150 °C aufweist.

3. Verfahren zur Herstellung von schlagzähmodifizierten Polyalkylenterephthalat/Polycarbonat-Zusammensetzungen gemäß Anspruch 1 oder 2, wobei die Zusammensetzung
A) 4 bis 95 Gew.-Teile Polyalkylenterephthalats,
B) 4 bis 95Gew.-Teile aromatisches Polycarbonat,
C) 1 bis 30 Gew.-Teile eines Schlagzähmodifikators aus Glycidylester und
D) 0 bis 20 Gew.-Teile üblicher Additive und Verarbeitungshilfsmittel,
enthält.

4. Verfahren zur Herstellung von schlagzähmodifizierten Polyalkylenterephthalat/Polycarbonat-Zusammensetzungen, umfassend
(i) Kombinieren einer Schmelze bei 90 - 175 °C eines Schlagzähmodifikators aus Glycidylester mit Polyalkylenterephthalat gemäß Komponente A in Form eines Pulvers mit einer mittleren Teilchengröße d₅₀ von 600 bis 700 µm und
(ii) Kombinieren der Mischung aus (i) mit mindestens einer Komponente ausgewählt aus der Gruppe bestehend aus Polyalkylenterephthalat (Komponente A) und Polycarbonat (Komponente B) und ggf. weiteren Komponenten, **dadurch gekennzeichnet, dass** dieser Verfahrensschritt bei Temperaturen von 220 bis 330°C in der Schmelze durch gemeinsames Kneten, Extrudieren oder Verwalzen der Komponenten erfolgt,
wobei die Zusammensetzung
A) 4 bis 95.Gew.-Teile Polyalkylenterephthalat,
B) 4 bis 95 Gew.-Teile Polycarbonat,
C) 1 bis 30 Schlagzähmodifikator aus Glycidylester und
D) 0 bis 20 Gew.-Teile übliche Additive und Verarbeitungshilfsmittel
enthält.

5. Verfahren zur Herstellung von schlagzähmodifizierten Polyalkylenterephthalat/Polycarbonat-Zusammensetzungen gemäß einem der Ansprüche 3 oder 4, wobei als Komponente C) ein Schlagzähmodifikator aus Glycidylester eingesetzt wird, welcher ein statistisches Copolymer der Formel (IV) ist, 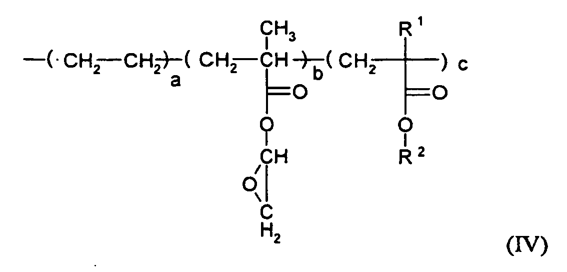 wobei
R¹ H oder C₁- bis C₆-Alkyl ist,
R² Alkyl oder Aryl ist,
a+b+c= 100 ist,
a 50 bis 99,5 ist,
b 0,5 bis 25 ist und
c 0 bis 50 ist.

## Claims

1. Process for producing impact-modified polyalkylene terephthalate/polycarbonate compositions, encompassing
(i) combining of a melt of an impact-modifier made of glycidyl ester with at least one component selected from the group consisting of polyalkylene terephthalate (according to component A) in the form of a powder and polycarbonate (according to component B) in the form of a powder
(ii) combining the mixture from (i) with at least one component selected from the group consisting of polyalkylene terephthalate (according to component A) and polycarbonate (according to component B) and optionally further components in the melt,
where the temperature of the melt in step (i) is from 90 to 175°C.

2. Process for producing impact-modified polyalkylene terephthalate/polycarbonate compositions according to Claim 1, where the temperature of the melt in step (i) is from 100 to 150°C.

3. Process for producing impact-modified polyalkylene terephthalate/polycarbonate compositions according to Claim 1 or 2, where the composition comprises
A) from 4 to 95 parts by weight of polyalkylene terephthalate,
B) from 4 to 95 parts by weight of aromatic polycarbonate,
C) from 1 to 30 parts by weight of an impact modifier made of glycidyl ester and
D) from 0 to 20 parts by weight of conventional additives and processing aids.

4. Process for producing impact-modified polyalkylene terephthalate/polycarbonate compositions, encompassing
(i) combining of a melt at from 90 to 175°C of an impact modifier made of glycidyl ester with polyalkylene terephthalate according to component A in the form of a powder with a median particle size d₅₀ of 600 to 700 µm and
(ii) combining the mixture from (i) with at least one component selected from the group consisting of polyalkylene terephthalate (component A) and polycarbonate (component B) and optionally further components, **characterized in that** this step is carried out at temperatures of from 220 to 330°C in the melt by kneading, extruding or rolling of the components together,
where the composition comprises
A) from 4 to 95 parts by weight of polyalkylene terephthalate,
B) from 4 to 95 parts by weight of aromatic polycarbonate,
C) from 1 to 30 parts by weight of an impact modifier made of glycidyl ester and
D) from 0 to 20 parts by weight of conventional additives and processing aids.

5. Process for producing impact-modified polyalkylene terephthalate/polycarbonate compositions according to Claim 3 or 4, where an impact modifier made of glycidyl ester is used as component C) and is a random copolymer of the formula (IV) 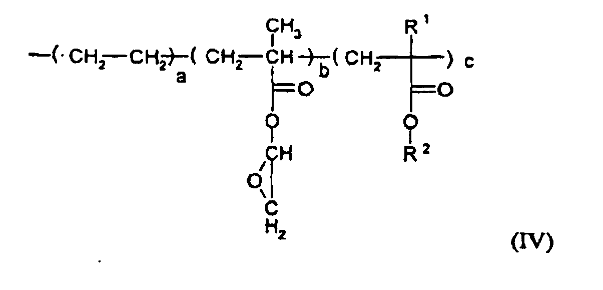 where
R¹ is H or C₁-C₆-alkyl,
R² is alkyl or aryl,
a + b + c = 100,
a is from 50 to 99.5,
b is from 0.5 to 25 and
c is from 0 to 50.

## Revendications

1. Procédé pour la préparation de compositions de poly(téréphtalate d'alkylène)/polycarbonate à résilience modifiée, comprenant
(i) la combinaison d'une masse fondue d'un modificateur de résilience d'ester de glycidyle avec au moins un composant choisi dans le groupe constitué par le poly(téréphtalate d'éthylène) (selon le composant A) sous forme d'une poudre et le polycarbonate (selon le composant B) sous forme d'une poudre,
(ii) la combinaison du mélange de (i) avec au moins un composant choisi dans le groupe constitué par le poly(téréphtalate d'éthylène) (selon le composant A) et le polycarbonate (selon le composant B) et le cas échéant d'autres composants dans la masse fondue,
où la masse fondue dans l'étape (i) présente une température de 90-175°C.

2. Procédé pour la préparation de compositions de poly(téréphtalate d'alkylène)/polycarbonate selon la revendication 1, où la masse fondue dans l'étape (i) présente une température de 100-150°C.

3. Procédé pour la préparation de compositions de poly(téréphtalate d'alkylène)/polycarbonate à résilience modifiée selon la revendication 1 ou 2, où la composition contient
A) 4 à 95 parties en poids de poly(téréphtalate d'alkylène),
B) 4 à 95 parties en poids de polycarbonate aromatique,
C) 1 à 30 parties en poids d'un modificateur de résilience d'ester de glycidyle et
D) 0 à 20 parties en poids d'additifs et d'adjuvants de transformation usuels.

4. Procédé pour la préparation de compositions de poly(téréphtalate d'alkylène)/polycarbonate à résilience modifiée, comprenant
(i) la combinaison d'une masse fondue à 90-175°C d'un modificateur de résilience d'ester de glycidyle avec du poly(téréphtalate d'alkylène) selon le composant A sous forme d'une poudre présentant une grosseur moyenne des particules d₅₀ de 600 à 700 µm et
(ii) la combinaison du mélange de (i) avec au moins un composant choisi dans le groupe constitué par le poly(téréphtalate d'éthylène) (composant A) et le polycarbonate (composant B) et le cas échéant d'autres composants, **caractérisé**
**en ce que** cette étape de procédé a lieu à des températures de 220 à 330°C dans la masse fondue par un malaxage, une extrusion ou un laminage commun des composants,
où la composition contient
A) 4 à 95 parties en poids de poly(téréphtalate d'alkylène),
B) 4 à 95 parties en poids de polycarbonate aromatique,
C) 1 à 30 parties en poids d'un modificateur de résilience d'ester de glycidyle et
D) 0 à 20 parties en poids d'additifs et d'adjuvants de transformation usuels.

5. Procédé pour la préparation de compositions de poly(téréphtalate d'alkylène)/polycarbonate à résilience modifiée selon l'une quelconque des revendications 3 ou 4, où on utilise comme composant C) un modificateur de résilience d'ester de glycidyle qui est un copolymère statistique de formule (IV) 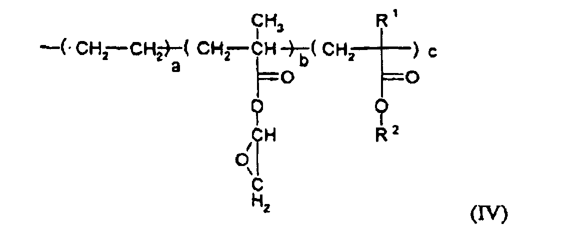 où
R¹ représente H ou C₁-C₆-alkyle,
R² représente alkyle ou aryle,
a + b + c = 100,
a vaut 50 à 99,5,
b vaut 0,5 à 25 et
c vaut 0 à 50.
